# EUROPEAN PATENT SPECIFICATION

(11) **EP 4 311 845 B1**
(45) Date of publication and mention of the grant of the patent: **17.06.2026**
(21) Application number: 22187269.0
(22) Date of filing: 27.07.2022
(51) Int. Cl.: C09D 5/00, C09D 5/44

(54) **ARTICLE COMPRISING A CORROSION INHIBITING COATING, AND METHOD FOR PRODUCING SUCH AN ARTICLE**
GEGENSTAND MIT EINER KORROSIONSHEMMENDEN BESCHICHTUNG UND VERFAHREN ZUR HERSTELLUNG EINES SOLCHEN GEGENSTANDES
ARTICLE COMPRENANT UN REVÊTEMENT INHIBANT LA CORROSION ET PROCÉDÉ DE FABRICATION D'UN TEL ARTICLE

(43) Date of publication of application: 31.01.2024
(73) Proprietor: ETA SA Manufacture Horlogère Suisse, 2540 Grenchen (CH)
(72) Inventor: PARTOVI NIA, Raheleh, 2540 Grenchen (CH)
(74) Representative: ICB SA

(56) References cited:
- WO-A1-2021/252567
- US-A1- 2015 023 860

## Description

### Technical field of the invention

The present invention relates to articles comprising a substrate and a corrosion inhibiting coating on at least a portion of the substrate's surface. The present invention further relates to method for producing such articles, and to the use of such articles.

### Background

One of the major degradation mechanism of materials or articles comprising metals, is corrosion. Corrosion can be generally defined as the reaction of a metallic material with its surrounding environment. Both the physical and chemical properties of materials have an influence the rate of the corrosion reactions. Hence, there is a need for slowing down, i.e. inhibiting, the corrosion reaction. Different approaches to prevent corrosion are known.

For example, it is known to dope the metal comprising substrates with elements that enrich the surface of the substrate with a corrosion resistant component during the corrosion process.

Alternatively, it is known to add corrosion inhibitors, which adsorb strongly on the metal comprising surface of the substrate and as such prevent the reaction with oxidizing agents, thereby preventing corrosion formation. Corrosion inhibitors protect the metallic substrate by forming a protective film of a passive nature, i.e. a passivation layer. Typically used corrosion inhibitors however are rather expensive, but also considered toxic according to the legislation nowadays.

It is also known to deposit a protective coating on the surface of the substrate, in particular in the areas that require protection against corrosion, such as the areas comprising metals. These coatings provide a protective barrier against the corrosive environment. However, many of the traditions corrosion protective coatings are considered nowadays as environmentally hazardous coatings, for example because of the use of compounds that are according to the current legislation considered toxic.

In recent years, coatings obtained by means of a sol-gel process have become interesting. Sol-gel coatings are desirable for their environmental friendliness, high performance, compatibility with existing coating application technologies and for the on-demand simplicity of tailoring the coating properties.

In particular, inorganic organic hybrid coatings, such as those known under the registered trademark Ormocer, obtained by means of a sol-gel process have gained interest. Such coatings have the potential to combine the inherent properties of inorganic materials with those of organic polymers. Inorganic-organic hybrid materials may achieve features that the pure inorganic or organic material cannot give. Generally, organic polymeric materials have a good elasticity, tenacity, shape ability, and have a rather low density, while inorganic materials are typically hard, stiff and thermally stable. With inorganic organic hybrid coatings, it is possible to vary and optimise the properties of the inorganic organic hybrid coating by varying the inorganic and the organic structural units. Due to their inorganic network, inorganic organic hybrid polymers are capable to exhibit a high mechanical, chemical and thermal stability in harsh environments.

Inorganic organic hybrid coatings are characterized by a direct linkage, i.e. a linkage on molecular scale, between the inorganic structural units and the organic structural units. The inorganic organic hybrid coatings are thus a polymer with three-dimensional inorganic and three-dimensional organic networks interconnected with covalent bonds.

The sol-gel process is a method for producing solid materials from small molecules, and is considered a sustainable and non-toxic technique. The process involves conversion of monomers into a colloidal solution (sol) that acts as a precursor for an integrated network (or gel) of either discrete particles or network polymers (cross-linked polymers).

*'*Hybrid sol-gel coatings: smart and green materials for corrosion mitigation', R. Figueira, I. Fontinha, et al., Coatings 2016, 6, 12, discloses sol-gel coatings for corrosion protection of steel, aluminium, and their alloys. The hybrid coatings are obtained by copolymerization of various combinations of two of tetraethyl orthosilicate (TEOS), 3-methacryloxypropyltrimethoxysilane (MAPTS), methyltriethoxysilane (MTES), and tri-isopropoxy(methyl)silane.

EP 1729892 discloses the production of inorganic organic hybrid coatings by means of a sol-gel process, wherein the pre-polymer (the so-called "sol") is cross-linked by exposing it to atmospheric pressure plasma, thereby obtaining a cross-linked inorganic organic hybrid coating (the so-called "gel").

Disadvantages of the abovementioned inorganic organic hybrid coatings include a limited adhesion to the substrate, causing delamination of the coating. Consequently, water and humidity can reach the interface between the coating and the surface of the substrate, leading to corrosion.

A disadvantage of the abovementioned methods, in particular CVD and PVD processes is the requirement of working in a controlled environment to avoid contamination, for example by working in a glovebox filled with an inert gas, or by working at reduced pressure. Consequently, such methods are complex and expensive. A disadvantage of methods using plating to deposit the coatings is that the deposition rate of the coating is very low and the process of coating deposition is long, and that the methods are not environmentally friendly because of the use of harsh chemicals. Further, a waste treatment step for recycling the waste products, especially chemicals, is required to reduce the environmental impact of such methods, making the methods complex and expensive.

It known from document US2015/0023860 a method for coating a nanosheet structure network on a substrate using a silicon-containing compound and hydrocarbon compounds, involving heating in an air-free environment to form a reactive gas composition and depositing it on the substrate.

It is also known from document WO2021/252567 a graft copolymer pretreatment composition designed to enhance the surface properties of metal products, particularly aluminum alloys, through multifunctional surface coatings.

### Summary of the invention

The present invention aims to overcome one or more of the above drawbacks. It is an aim of the invention to provide an article comprising a substrate comprising a corrosion inhibiting coating having an excellent adhesion to the substrate. It is a further aim to provide an article comprising a substrate and a coating, wherein the coating provides the substrate with excellent corrosion protection, and wherein the coating is non-toxic.

It is a further aim of the invention to provide a method for producing such an article, wherein the method does not require the use of harsh or toxic compounds, is performed at moderate temperatures and does not require long treatment times. In other words, it is an aim to provide methods having a reduced energy consumption compared to the methods of the prior art.

According to a first aspect of the invention, there is disclosed an article comprising a substrate and a corrosion inhibiting coating as set out in the appended claims.

The substrate comprises a metallic element and/or an alloy of a metallic element. Advantageously, at least a portion of a surface of the substrate comprises the metallic element and/or the alloy thereof. For example, the metallic element and/or the alloy thereof can be present only at the surface of the substrate. Alternatively, the substrate can substantially consist of the metallic element and/or the alloy thereof.

Advantageously, the metallic element is iron or copper. Advantageously, the substrate comprises iron, for example an alloy comprising iron, such as steel. Advantageously, the steel can be any type of steel, in particular any type of steel used in components for watches. For example, the iron alloy can be stainless steel or carbon steel. Alternatively, or additionally, the substrate comprises copper, for example an alloy comprising copper, such as brass.

In the light of the present invention, "a corrosion inhibiting coating" means that the presence of the coating on a substrate reduces, and advantageously avoids, the formation of corrosion on the areas of the surface of the substrate comprising such a coating.

The corrosion inhibiting coating is a cross-linked inorganic organic hybrid coating comprising at least one functional group R¹. Advantageously, R¹ comprises one or more functional groups selected from the group consisting of C₁-C₂₀ alkyl, C₁-C₂₀ cycloalkyl, C₁-C₁₀ aryl, amide, amine, ether, mercapto (i.e. thiol), and epoxy. Further, R¹ comprises at least one halogen atom. Advantageously, the halogen atom is fluorine, chlorine, bromine, or iodine. When R¹ comprises two or more halogen atoms, they can be the same or different, i.e. a combination of two or more of fluorine, chlorine, bromine, and iodine. The corrosion inhibiting coating further comprises silicon and/or titanium.

According to an embodiment, R¹ is a C₁-C₂₀ alkyl, i.e. an alkyl having between 1 and 20 carbon atoms in its chain. Advantageously, R¹ is a C₁-C₂₀ alkyl having the formula -(CH₂)ₓ(CF₂)_{y}CF₃, wherein x is between 0 and z-1, y is z-x-1, and z is the total number of carbon atoms, i.e. z is between 1 and 20. For example, when R¹ is C₈ alkyl, i.e. z is 8, it can have the formula - (CH₂)₂(CF₂)₅CF₃ (x being 2 and y being 5).

Alternatively, R¹ comprises an amide functional group and one or more ether functional groups. For example R¹ can be -(CH₂)₃NHC(O)OCH₂CF(CF₃)OCF₂CF(CF₃)O(CF₂)₂CF₃.

The cross-linked inorganic organic hybrid coating is at least partially covalently bonded to the metallic element or the alloy thereof of the substrate. With "at least partially covalently bonded" it is meant that the coating is bonded to the metallic element or the alloy thereof by at least one, and preferably several, covalent bonds. Advantageously, when the corrosion inhibiting coating comprises silicon, the covalent bonds include an oxygen-silicon bond. Advantageously, when the corrosion inhibiting coating comprises titanium, the covalent bonds include an oxygen-titanium bond.

Advantageously, the cross-linked inorganic organic hybrid coating further comprises carbon-silicon bonds.

The corrosion inhibiting coating is present on at least part of a surface of the substrate. In other words, the corrosion inhibiting coating advantageously covers at least part of a surface of the substrate. Advantageously, the corrosion inhibiting coating is present at portions of the substrate prone to corrosion. Alternatively, the corrosion inhibiting coating is present on, or covers, the entire surface of the substrate.

Non-limiting examples of the article of the present disclosure include components used in environments prone to corrosion, such as components of ships, components of electronic devices, such as a printed circuit board, components prone to corrosion during storage, or components prone to a change of aesthetics, such as colour or brightness, due to oxidation or corrosion. A particular example of the article of the present disclosure includes components of watches and clocks.

According to a second aspect of the invention, there is disclosed a method for producing an article comprising a substrate and an corrosion inhibiting coating present on at least part of a surface of the substrate as set out in the appended claims.

Advantageously, the article is according to the first aspect of the present invention. Advantageously, a substrate as described hereinbefore is provided. Advantageously, the substrate comprises a metallic element and/or an alloy of a metallic element on at least a portion of a surface of the substrate. Advantageously, the metallic element and the alloy thereof are as hereinbefore described.

The invention also concerns a method according to claim 10 of the patent.

Advantageously, the halogen atom is fluorine, chlorine, bromine, or iodine. When R¹ comprises two or more halogen atoms, they can be the same or different, i.e. a combination of two or more of fluorine, chlorine, bromine, and iodine.

With "cross-linkable functional group" is meant in the light of the present disclosure a functional group which is capable of reacting with other functional groups. Upon reaction, covalent bonds are formed, thereby realising a cross-linked polymer. A cross-linked polymer can be considered as a polymer having a three dimensional structure.

Advantageously, R⁵ is a thermo-cross-linkable group and/or a photo-cross-linkable group. In other words, R⁵ can be thermo-cross-linkable, photo-cross-linkable, or both.

With a "thermo-cross-linkable group" is meant in the light of the present disclosure that cross-linking of R⁵ is induced and/or takes place by thermal cross-linking, also named thermal curing. Thermal curing is performed by exposing the (thermo-)cross-linkable group, and in the present disclosure thus the pre-polymer comprising such a cross-linkable group, to an elevated temperature, i.e. by heating the pre-polymer.

With a "photo-cross-linkable group" is meant in the light of the present disclosure that cross-linking of R⁵ is induced and/or takes place by photochemical cross-linking, also named photochemical curing. Photochemical curing is performed by exposing the (photo-)cross-linkable group, and in the present disclosure thus the pre-polymer comprising such a cross-linkable group to a radiation. Advantageously, the radiation comprises one or more of infrared (IR) radiation, ultraviolet (UV) radiation, or radiation with light having a wavelength in the wavelength range of visible light (VIS).

Advantageously, R⁵ is a functional group selected from the group consisting of an epoxy, a (meth)acrylate, an ester, a mercapto, a vinyl, and a (meth)acrylated urethane. With "(meth)acrylate" is meant in the present disclosure that the functional group can be an acrylate or a methacrylate.

Advantageously, R², R³, R⁴, R⁶, R⁷, and R⁸ are each independently from each other H or C₁-C₂₀ alkyl, preferably C₁-C₈ alkyl, more preferably C₁-C₆ alkyl, most preferably C₁-C₄ alkyl. In particular, R², R³, R⁴, R⁶, R⁷, and R⁸ are each independently methyl (-CH₃, i.e. C₁ alkyl)), or ethyl (-C₂H₅, i.e. C₂ alkyl).

The first compound and the second compound are hydrolysed in the presence of water. Upon hydrolysis, the C₁-C₈ alkyl chain of any one of R², R³, R⁴, R⁶, R⁷, and R⁸ being C₁-C₈ alkyl is converted into a hydrogen atom, thereby forming hydroxyl groups, and alcohol molecules of formula CₓH₂ₓ₊₁OH, wherein x is the number of carbon atoms in the C₁-C₈ alkyl chain of R², R³, R⁴, R⁶, R⁷, and R⁸ (i.e. x is between 1 and 8), are formed.

Next, the hydrolysed first compound and the hydrolysed second compound are condensed. Upon condensation, water is removed. Upon condensation, a pre-polymer is obtained from the hydrolysed first compound and the hydrolysed second compound. The pre-polymer comprises R¹ and R⁵ as functional groups. The pre-polymer can be considered a so-called "sol".

The pre-polymer is applied to at least part of a surface of the substrate. Advantageously, the pore-polymer is applied to at least part of the surface comprising the metallic element and/or the alloy thereof. The application can be done by methods known in the art, for example casting or dipping the substrate into the pre-polymer, spraying the pre-polymer onto the substrate, bar coating, or roll-to-roll coating.

Optionally, the substrate can be cleaned prior to applying the pre-polymer to at least a part thereof (so-called pre-cleaning). Advantageously, at least the part of the surface of the substrate to which the pre-polymer is to be applied is pre-cleaned. The pre-cleaning can be performed by methods known in the art. Non-limiting examples include grinding and polishing, chemical cleaning, ultrasonic cleaning, sandblasting, plasma treating at atmospheric pressure or at reduced pressure, or corona treating (air plasma).

The pre-polymer applied to at least part of the surface of the substrate is cross-linked. Advantageously, the cross-linking of the pre-polymer is realised by cross-linking of the cross-linkable functional group R⁵.

When R⁵ is a thermo-cross-linkable functional group, the cross-linking is advantageously induced and/or performed by exposing the pre-polymer to a temperature up to 250 °C, advantageously a temperature between 25 °C and 250 °C, preferably between 50 °C and 200 °C, more preferably between 75 °C and 185 °C, such as between 100 °C and 175 °C, or between 125 °C and 160 °C.

When R⁵ is a photo-cross-linkable functional group, the cross-linking is advantageously induced and/or performed by exposing the pre-polymer to radiation. Advantageously, the radiation is IR radiation or UV radiation, or a combination thereof.

Upon cross-linking, a corrosion inhibiting coating is obtained on the part of the surface of the substrate to which the pre-polymer is applied. The coating is covalently bonded to the metallic element or the alloy thereof of the substrate by means of oxygen-M bonds, wherein M is silicon or titanium.

The corrosion inhibiting coating is a cross-linked inorganic organic hybrid coating comprising at least one functional group R¹ (a so-called "gel").

According to a third aspect of the present invention, there is disclosed the use of an article according to the first aspect or obtained by the second aspect as set out in the appended claims. Advantageously, the article is used in a watch.

### Brief description of the figures

Aspects of the invention will now be described in more detail with reference to the appended drawings, wherein same reference numerals illustrate same features and wherein:
- Figure 1 schematically represents an article of the invention,
- Figure 2 shows the open circuit potential values for substrate coated with inventive and reference coatings.

### Detailed description of the invention

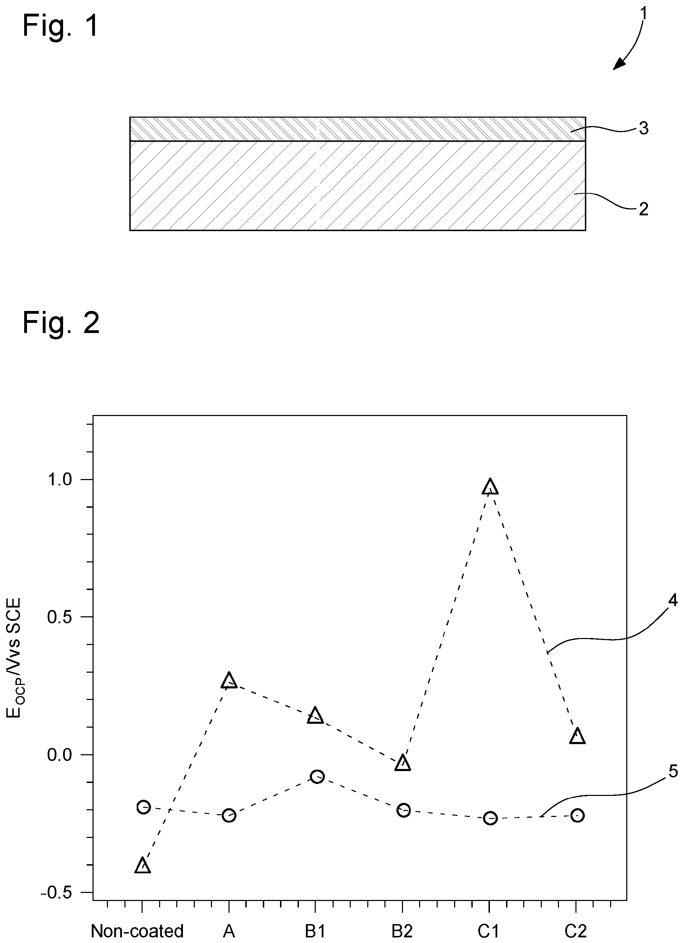

Figure 1 schematically shows an article 1 according to the invention. The article comprises a substrate 2 and a corrosion inhibiting coating 3 covering at least part of a surface of the substrate 2.

The substrate 2 comprises a metallic element and/or an alloy of a metallic element. Advantageously, at least a portion of a surface of the substrate 2 comprises the metallic element and/or the alloy thereof. Advantageously, at least a portion, for example all, of the portion of the surface comprising the metallic element and/or an alloy thereof is covered with the corrosion inhibiting coating 3. By doing so, any areas of the substrate prone to corrosion during handling, storage, manufacturing and manipulation can be efficiently protected against corrosion. Advantageously, substantially the entire surface of the substrate 2 is covered with a corrosion inhibiting coating 1, as shown in figure 1.

Non-limiting examples of the metallic element include iron, copper, aluminium, zinc, silver, gold, tin, manganese, and nickel. The substrate can comprise two or more metallic elements and/or alloys thereof. Advantageously, substrate comprises iron and/or copper.

For example, the substrate can comprise or substantially consist of iron. For example, when the substrate comprises iron, the substrate can comprise or can be steel, such as carbon steel.

For example, the substrate can comprise or substantially consist of copper. For example, when the substrate comprises copper, the substrate can comprise or can be brass or bronze.

With "substantially consisting" is meant in the present invention that the amount of impurities or other components present in the substrate is advantageously below 1 % by weight, preferably below 0.5 % by weight, more preferably below 0.1 % by weight, such as below the detection limit of analysis techniques used to determine the composition, such as X-ray photoelectron spectroscopy (XPS).

Optionally, the substrate can comprise further non-metallic elements and/or non-metallic compounds. Non-limiting examples of such non-metallic elements include phosphorous, or metalloids such as silicon and arsenic. Non-limiting examples of non-metallic compounds include polytetrafluoroethylene (PTFE), polyethylene, polypropylene, polyurethane, polyamide, polyimide, polyamide-imide, epoxy resins such as FR4, and glass.

Advantageously, the corrosion inhibiting coating is an inorganic organic hybrid coating. Advantageously, the corrosion inhibiting coating is a cross-linked inorganic organic hybrid coating. Advantageously, the corrosion inhibiting coating is at least partially covalently bonded to the surface of the substrate, in particular to the metallic element or, when the metallic element is present as an alloy, to the metallic element comprised in the alloy. Advantageously, the corrosion inhibiting coating is covalently bonded to the metallic element by oxygen-comprising bonds, such as oxygen-atoms of the coating covalently bonded to the metallic element.

Advantageously, the cross-linked inorganic organic hybrid coating comprises one or more of silicon, titanium, zirconium, aluminium, iron, or boron, preferably silicon and/or titanium. Advantageously, when the cross-linked inorganic organic hybrid coating comprises silicon and/or titanium, the coating is at least partially covalently bonded to the metallic element of the substrate by silicon-oxygen-metallic element and/or titanium-oxygen-metallic element bonds, respectively.

Advantageously, the inorganic organic hybrid coating comprises at least one functional group R¹. Advantageously, R¹ comprises or consists of one or more functional groups selected from the group consisting of C₁-C₂₀ alkyl, C₁-C₂₀ cycloalkyl, C₁-C₁₀ aryl, amide, amine, ether, mercapto (i.e. thiol), and epoxy.

Advantageously, "C₁-C₂₀ alkyl" includes alkyl functional groups comprising between 1 and 20 carbon atoms in the chain. Advantageously, the C₁-C₂₀ alkyl is C₁-C₁₂ alkyl, preferably C₁-C₁₀ alkyl, such as C₁-C₈ alkyl, C₁-C₆ alkyl, or C₁-C₄ alkyl.

Advantageously, "C₁-C₂₀ cycloalkyl" includes cycloalkyl functional groups comprising in total between 1 and 20 carbon atoms in the chain.

Advantageously, "C₁-C₁₀ aryl" includes aryl functional groups comprising between 1 and 10 carbon atoms in the chain. For example, R¹ can comprise a phenyl functional group, or can be C₁-C₂₀ alkyl phenyl.

Advantageously, when R¹ comprises an amide functional group, R¹ has the formula -(CH₂)ₐ(CF₂)_{b}C(O)NH₂, wherein a is between 0 and c-2, b is c-a-1, and c is the total number of carbon atoms. Advantageously, c is between 2 and 20, preferably between 2 and 10, such as between 2 and 8, between 2 and 6, or between 2 and 4, such as 2, 3 or 4.

Advantageously, when R¹ comprises an amine functional group, R¹ has the formula -(CH₂)ₚ(CF₂)_{q}NH₂, wherein p is between 0 and r-1, q is r-p-1, and r is the total number of carbon atoms. Advantageously, r is between 1 and 20, preferably between 1 and 10, such as between 1 and 8, between 1 and 6, or between 1 and 4, such as 1, 2, 3 or 4.

Advantageously, when R¹ comprises a mercapto (thiol) functional group, R¹ has the formula -(CH₂)ᵤ(CF₂)ᵥSH, wherein u is between 0 and w-1, v is w-u-1, and rwis the total number of carbon atoms. Advantageously, w is between 1 and 20, preferably between 1 and 10, such as between 1 and 8, between 1 and 6, or between 1 and 4, such as 1, 2, 3 or 4.

Advantageously, the inorganic organic hybrid coating further comprises at least one halogen atom. Advantageously, the halogen atom is fluorine, chlorine, bromine, or iodine. When R¹ comprises two or more halogen atoms, they can be the same or different, i.e. a combination of two or more of fluorine, chlorine, bromine, and iodine. The corrosion inhibiting coating further comprises silicon and/or titanium.

Advantageously, R¹ comprises or consists of C₁-C₂₀ alkyl according to formula (III)

-(CH₂)ₓ(CF₂)yCF₃ (III)

wherein
x is between 0 and z-1,
y is z-1-x, and
z is the number of carbon atoms in the chain, and is between 0 and 20.

For example, R¹ can be -(CH₂)₂(CF₂)₅CF₃, i.e. z is 8, x is 2 and y is 5. For example, R¹ can be -(CH₂)₅CF₃, i.e. z is 6, x is 5 and y is 0.

R¹ can be a C₁-C₂₀ perfluoroalkyl, i.e. an alkyl wherein all hydrogen atoms are replaced by fluorine atoms, according to -(CF₂)_{y}CF₃, i.e. wherein in formula (III) x is 0, y is z-1, and z is between 1 and 20. For example, R¹ can be a C₈ perfluoroalkyl, i.e. -(CF₂)₇CF₃ (z = 8, x = 0 and y = 7 in formula (III)), a C₆ perfluoroalkyl, i.e. -(CF₂)₅CF₃ (z = 6, x = 0 and y = 5 in formula (III)), or a C₄ perfluoroalkyl, i.e. -(CF₂)₃CF₃ (z = 4, x = 0 and y = 3 in formula (III)).

Advantageously, the coating has a thickness between 1 µm and 20 µm, preferably between 1.2 µm and 10 µm, such as between 1.5 µm and 5 µm. As will be understood, the optimal coating thickness depends, amongst others, on the substrate to be protected, in particular its composition and shape, and on the intended use of the article.

Advantageously, when the substrate comprises iron, such as steel, in particular carbon steel, the coating has a thickness of at least 2 µm, for example at least 2.1 µm, preferably at least 2.2 µm, such as at least 2.3 µm, at least 2.4 µm, or at least 2.5 µm. When the coating has such a thickness, efficient corrosion protection is provided to the substrate.

Advantageously, when the substrate comprises copper, such as brass or bronze, the coating has a thickness of at least 1 µm, preferably at least 1.2 µm, such as at least 1.3 µm, at least 1.4 µm, or at least 1.5 µm. When the coating has such a thickness, efficient corrosion protection is provided to the substrate.

Advantageously, when the article is a watch component, i.e. is used in a watch, the thickness advantageously is 5 µm or lower. As is known in the field of watch components, higher thicknesses might impact the functioning of the watch, and may require redesign of the component, which involves significant costs. The inventors have discovered that the articles of the present invention, wherein the coating thickness is at most 5 µm, allow to show significant reduction in corrosion while avoiding the need for redesigning.

For example, when the substrate comprises iron, such as carbon steel, the coating has advantageously a thickness between 2 µm and 5 µm, preferably between 2.2 µm and 5 µm, more preferably between 2.4 µm and 5 µm.

For example, when the substrate comprises copper, such as bronze or brass, the coating has advantageously a thickness between 1 µm and 5 µm, preferably between 1.2 µm and 5 µm, for example between 1.3 µm and 5 µm, more preferably between 1.5 µm and 5 µm.

### Examples

Two types of substrates were provided: a carbon steel plate and a brass plate.

A reference article was obtained by applying a reference corrosion inhibiting coating to both substrates. The reference corrosion inhibiting coating was a halogen-free coating.

Four different pre-polymers according to the invention were prepared. Details on the functional groups are listed in Table 1. Two pre-polymers comprised a fluorinated alkyl group having the formula -(CH₂)₂(CF₂)₅CF₃ as functional group (B1 and B2 of Table 1). B1 comprised a low ratio of the fluorinated alkyl functional group and B2 comprised a high ratio of the fluorinated alkyl functional group, based on the total weight of the respective pre-polymer. Two further pre-polymers comprised a functional group comprising an amide functional group and ether functional groups, having the formula -(CH₂)₃NHC(O)OCH₂CF(CF₃)OCF₂CF(CF₃)O(CF₂)₂CF₃ (C1 and C2 of Table 1). C1 comprised a low ratio of the functional group and C2 comprised a high ratio of the functional group, based on the total weight of the respective pre-polymer.

**Table 1: overview of coatings tested**

| **Coating** | **Functional group** | **Ratio** |
|---|---|---|
| A | Reference halogen-free | |
| B1 | -(CH₂)₂(CF₂)₅CF₃ | Low |
| B2 | -(CH₂)₂(CF₂)₅CF₃ | High |
| C1 | -(CH₂)₃NHC(O)OCH₂CF(CF₃)OCF₂CF(CF₃)O(CF₂)₂CF₃ | Low |
| C2 | -(CH₂)₃NHC(O)OCH₂CF(CF₃)OCF₂CF(CF₃)O(CF₂)₂CF₃ | High |

The pre-polymers of the invention were applied to the carbon steel and the brass substrate by dipping the substrates in the pre-polymer, followed by thermal curing at 160 °C. The coatings obtained on the carbon steel substrate all had a thickness between 1 µm and 3 µm, and the coatings on the brass substrate all had a thickness between 1.5 µm and 2.5 µm.

It was noticed that all four inventive coatings (B1, B2, C1, C2) were transparent and covered in a homogeneous way the substrate. Further, it was noticed that coating C2 showed a higher flexibility (a lower rigidity) than coating C1, which can contribute to a reduced risk of formation of defects, such as cracks, upon higher thicknesses. It was also noticed that coating B2 was easier to clean, and presented a slightly lower surface energy than coating B1, which comprised a lower amount of fluorinated functional groups. The surface energy was measured by measuring the water contact angle according to standard ASTM D5946, and converting the water contact angle to a surface energy value by using known and publicly available conversion tables.

The corrosion protective properties of all five articles, as well as the substrates without any corrosion protection was tested in a 0.1 % NaCl solution by measuring the open circuit potential (OCP). Higher OCP values are a measure for better protection against corrosion, as damage such as short circuiting caused by corrosion is significantly reduced. The OCP was measured by the EC-pen method against the saturated calomel electrode (SCE) as the reference electrode, at 24 °C. The results are shown in figure 2, wherein "non-coated" represents the OCP-value for the substrates without any corrosion protection. The values indicated with a triangle 4 represent the OCP values for the carbon steel substrate and the values indicated with a circle 5 represent the OCP values for the brass substrate.

From figure 2 it is clear that all corrosion inhibiting or corrosion protecting coatings applied to carbon steel lead to higher OCP values than the uncoated, unprotected substrate. As it is commonly known, carbon steel without any protection easily corrodes. The results thus indicate that all coatings provide protection against corrosion for the carbon steel substrate. Further, the coatings based on the epoxy-comprising functional group (C1 and C2) provide better protection than the reference coating, whereas the alkyl functional group (B1 and B2) show a slightly lower protection, which is still significant when compared to the bare substrate.

The coatings on the brass substrate did not seem to provide a significantly improved corrosion protection in terms of OCP value. However, it should be noted that, as it is commonly known, brass itself, i.e. without any protection provided, has already a certain resistance against corrosion. This is visible by the bare brass substrate which had a significantly higher OCP value than the bare carbon steel substrate. Consequently, it follows from Figure 2 that none of the coatings decreased the inherent corrosion protection of the brass substrate. Further, coating B1 showed a significantly higher OCP value than the uncoated substrate.

As a second test to evaluate the corrosion protection, the release of ions from the substrate was measured. A higher release, or leaching, of ions comprised in the substrate is an indication for a higher damage to the substrate, by side-reactions such as corrosive reactions.

The untreated substrates, as well as the substrates with coatings B1 and C1 were tested for the release of ions. The substrates were placed in a 0.9 % NaCl solution at 37 °C for 7 days. Any ions released were measured by Inductively Coupled Plasma Spectroscopy (ICP-MS).

Table 2 shows the results for the carbon steel substrate and table 3 for the brass substrate. "< LOD" means that the concentration of ions released was below the limit of detection.

**Table 2: Concentration of ions released from carbon steel substrate in 0.9 % NaCl solution at 37 °C during 7 days**

| **Ion** | **Non-coated** | **B1** | **C1** |
|---|---|---|---|
| Al | 28.69 µg/cm² | < LOD | < LOD |
| Si | < LOD | < LOD | < LOD |
| P | < LOD | < LOD | < LOD |
| Mn | 9.87 µg/cm² | 2.39 µg/cm² | 2.70 µg/cm² |
| Fe | 4118.16 µg/cm² | 816.38 µg/cm² | 756.28 µg/cm² |
| Ni | < LOD | < LOD | < LOD |
| Cu | < LOD | < LOD | < LOD |
| Zn | < LOD | < LOD | < LOD |
| Sn | < LOD | < LOD | < LOD |
| Pb | 1.78 µg/cm² | < LOD | < LOD |
| **Total** | **4158.50 µg/cm²** | **818.77 µg/cm²** | **758.98 µg/cm²** |

From Table 2 it is clear that a significantly lower concentration of iron (Fe) and manganese (Mn) ions is dissolved from the substrate into the NaCl solution for the coated carbon steel substrates, when compared to the substrates without any corrosion protection ("non-coated"). Further, no release or leaching of any lead (Pb) ions was detected for the coated substrates, contrary to the uncoated substrate. This indicates an efficient protection of the carbon steel substrate by the inventive coatings.

**Table 3: Concentration of ions released from brass substrate in 0.9 % NaCl solution at 37 °C during 7 days**

| **Ion** | **Non-coated** | **B1** | **C1** |
|---|---|---|---|
| Al | < LOD | < LOD | < LOD |
| Si | < LOD | < LOD | < LOD |
| P | < LOD | < LOD | < LOD |
| Mn | < LOD | < LOD | < LOD |
| Fe | < LOD | < LOD | < LOD |
| Ni | < LOD | < LOD | < LOD |
| Cu | 2.16 µg/cm² | < LOD | < LOD |
| Zn | 143.85 µg/cm² | < LOD | < LOD |
| Sn | < LOD | < LOD | < LOD |
| Pb | 5.33 µg/cm² | 0.34 µg/cm² | 0.34 µg/cm² |
| **Total** | **151.34 µg/cm²** | **0.34 µg/cm²** | **0.34 µg/cm²** |

From Table 3 it is clear that no release of cupper (Cu) and zinc (Zn) ions, the main components of brass, is dissolved from the brass substrate into the NaCl solution for the coated brass substrates, contrary to the substrates without any corrosion protection ("non-coated"). This indicates an efficient protection of the brass substrate by the inventive coatings.

It was further noticed that the brass substrates without any coating changed colour, or shiny, within 3 to 5 days exposure to the atmosphere (sunshine, air). The gold-like colour changed in an orange shine. When such brass components are used in watches, and are visible from the outside, this change of shade, shine or colour is an unwanted change from aesthetic point of view. Contrary to uncoated brass, it was noticed that the same substrate coated with coatings according to the invention did not show any signs of corrosion after exposure to the atmosphere for months (up to 6 months was tested without any visible change noticed).

The adhesion strength of coatings B1 and C1 on both substrates was measured according to EN ISO 2409 (the so-called "cross-cut test). All tested samples scored 0, indicating that the edges of the cuts were smooth and that none of the squares of the lattice had detached.

### Nomenclature

- 1.: article
- 2.: substrate
- 3.: corrosion inhibiting coating
- 4.: carbon steel OCP values
- 5.: brass OCP values

## Claims

1. An article comprising a substrate and a corrosion inhibiting coating present on at least part of a surface of the substrate, wherein the substrate comprises a metallic element and/or an alloy of a metallic element, wherein the corrosion inhibiting coating is a cross-linked inorganic organic hybrid coating obtained by cross-linking of a pre-polymer obtained by hydrolysing and condensing of a compound according to formula (I) and a compound according to formula (II), 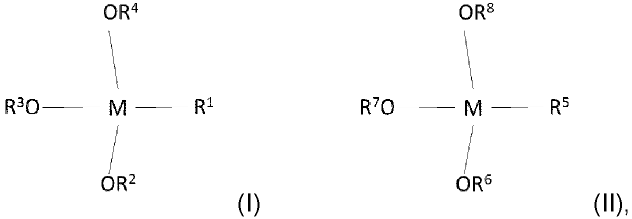 wherein
M in formula (I) and in formula (II), individually, is silicon or titanium, R¹ is C₁-C₂₀ alkyl comprising at least one fluorine atom,
R⁵ is a cross-linkable functional group selected from the group consisting of an epoxy, a (meth)acrylate, an ester, a mercapto, a vinyl, and a (meth)acrylated urethane,
R², R³, R⁴, R⁶, R⁷, and R⁸ are each independently from each other H, a C₁-C₂₀ alkyl, a C₁-C₁₀ aryl, C₁-C₂₀ alkenyl, C₁-C₂₀ alkylaryl, or C₁-C₂₀ arylalkyl,
wherein the cross-linked inorganic organic hybrid coating comprises silicon and/or titanium and comprises at least one functional group R¹,
**characterized in that**
- the inorganic organic hybrid coating is cross-linked via a (meth)acrylate, an ester, a mercapto, a vinyl, or a (meth)acrylated urethane, and
- the cross-linked inorganic organic hybrid coating is covalently bonded to the metallic element or the alloy thereof by means of oxygen-silicon bonds and/or oxygen-titanium bonds, respectively.

2. Article according to claim 1, wherein the cross-linked inorganic organic hybrid coating further comprises carbon-silicon bonds.

3. Article according to any one of the preceding claims, wherein R¹ is -(CH₂)ₓ(CF₂)_{y}CF₃, wherein x is between 0 and z-1, y is z-x-1, and z is the number of carbon atoms and is between 1 and 20.

4. Article according to claim 3, wherein R¹ is -(CH₂)₂(CF₂)₅CF₃.

5. Article according to any one of claims 1 to 2, wherein R¹ is -(CH₂)₃NHC(O)OCH₂CF(CF₃)OCF₂CF(CF₃)O(CF₂)₂CF₃.

6. Article according to any one of the preceding claims, wherein the metallic element is iron or copper.

7. Article according to claim 6, wherein the metallic element is iron and the substrate comprises steel, preferably carbon steel.

8. Article according to claim 6, wherein the metallic element is copper and the substrate comprises a copper alloy, preferably brass.

9. Article according to any one of the preceding claims, wherein the article is a watch component.

10. A method for producing an article comprising a substrate and a corrosion inhibiting coating present on at least part of a surface of the substrate, the article according to any one of the preceding claims, wherein the method comprises:
- providing a substrate comprising a metallic element and/or an alloy of a metallic element,
- providing a first compound according to formula (I) and a second compound according to formula (II),
- hydrolysing the first compound and the second compound in the presence of water,
- condensing the hydrolysed first compound and the hydrolysed second compound together, thereby obtaining a pre-polymer comprising R¹ and R⁵ as functional groups,
- applying the pre-polymer to at least part of a surface of the substrate, and
- inducing cross-linking of the cross-linkable functional group R⁵ by exposing the pre-polymer to one or more of a temperature up to 250 °C, UV radiation or IR radiation, thereby obtaining an article comprising a substrate and a corrosion inhibiting coating covering at least part of a surface of the substrate,
**characterized in that** the corrosion inhibiting coating is a cross-linked inorganic organic hybrid coating comprising at least one functional group R¹, and that the cross-linked inorganic organic hybrid coating is covalently bonded to the metallic element or the alloy thereof by means of oxygen-M bonds.

11. Method according to claim 10, wherein the cross-linking is performed at a temperature between 50 °C and 200 °C, preferably between 100 °C and 175 °C.

12. Method according to claim 10 or claim 11, wherein R¹ is -(CH₂)ₓ(CF₂)_{y}CF₃, wherein x is between 0 and z-1, y is z-x-1, and z is the number of carbon atoms and is between 1 and 20.

13. Method according to any one of claims 10 to 11, wherein R¹ is R¹ is -(CH₂)₃NHC(O)OCH₂CF(CF₃)OCF₂CF(CF₃)O(CF₂)₂CF₃.

14. Method according to any one of claims 10 to 13, wherein R², R³, R⁴, R⁶, R⁷, and R⁸ are each independently from each other C₁-C₈ alkyl, preferably C₁-C₄ alkyl.

15. Use of the article according to any one of claims 1 to 9 in a watch.

## Patentansprüche

1. Gegenstand, der ein Substrat und eine korrosionshemmende Beschichtung umfasst, die auf mindestens einem Teil einer Oberfläche des Substrats vorhanden ist, wobei das Substrat ein metallisches Element und/oder eine Legierung eines metallischen Elements umfasst, wobei die korrosionshemmende Beschichtung eine vernetzte anorganisch-organische Hybridbeschichtung ist, die durch Vernetzung eines Präpolymers erhalten wird, das durch Hydrolysieren und Kondensieren einer Verbindung gemäß Formel (I) und einer Verbindung gemäß Formel (II) erhalten wird, 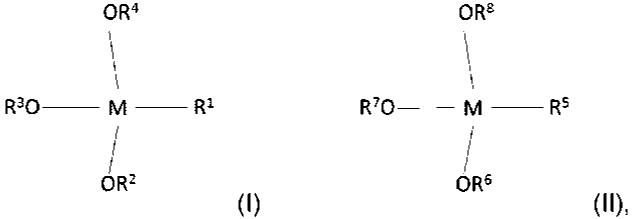 wobei
M in Formel (I) und in Formel (II) jeweils Silizium oder Titan ist,
R¹ ein C₁-C₂₀-Alkyl mit mindestens einem Fluoratom ist,
R⁵ eine vernetzbare funktionelle Gruppe, ausgewählt aus der Gruppe bestehend aus einer Epoxygruppe, einer (Meth)acrylatgruppe, einer Estergruppe, einer Mercaptogruppe, einer Vinylgruppe und einer (Meth)acrylierten Urethangruppe ist,
R², R³, R⁴, R⁶, R⁷ und R⁸ jeweils unabhängig voneinander H, ein C₁-C₂₀-Alkyl, ein C₁-C₁₀-Aryl, ein C₁-C₂₀-Alkenyl, ein C₁-C₂₀-Alkylaryl oder ein C₁-C₂₀-Arylalkyl sind,
wobei die vernetzte anorganisch-organische Hybridbeschichtung Silizium und/oder Titan sowie mindestens eine funktionelle Gruppe R¹ umfasst, **dadurch gekennzeichnet, dass**
- die anorganisch-organische Hybridbeschichtung über eine (Meth)acrylatgruppe, eine Estergruppe, eine Mercaptogruppe, eine Vinylgruppe oder eine (Meth)acrylierte Urethangruppe vernetzt ist und
- die vernetzte anorganisch-organische Hybridbeschichtung mittels Sauerstoff-Silizium-Bindungen und/oder Sauerstoff-Titan-Bindungen kovalent an das metallische Element oder dessen Legierung gebunden ist.

2. Gegenstand nach Anspruch 1, wobei die vernetzte anorganisch-organische Hybridbeschichtung ferner Kohlenstoff-Silizium-Bindungen umfasst.

3. Gegenstand nach einem der vorhergehenden Ansprüche, wobei R¹ gleich -(CH₂)x(CF₂)yCF₃ ist, wobei x zwischen 0 und z-1 liegt, y gleich z-x-1 ist und z die Anzahl der Kohlenstoffatome bezeichnet und zwischen 1 und 20 liegt.

4. Gegenstand nach Anspruch 3, wobei R¹ gleich -(CH₂)₂(CF₂)₅CF₃ ist.

5. Gegenstand nach einem der Ansprüche 1 bis 2, wobei R¹ gleich - (CH₂)₃NHC(O)OCH₂CF(CF₃)OCF₂CF(CF₃)O(CF₂)₂CF₃ ist.

6. Gegenstand nach einem der vorhergehenden Ansprüche, wobei das metallische Element Eisen oder Kupfer ist.

7. Gegenstand nach Anspruch 6, wobei das metallische Element Eisen ist und das Substrat Stahl, vorzugsweise Kohlenstoffstahl, umfasst.

8. Gegenstand nach Anspruch 6, wobei das metallische Element Kupfer ist und das Substrat eine Kupferlegierung, vorzugsweise Messing, umfasst.

9. Gegenstand nach einem der vorhergehenden Ansprüche, wobei der Gegenstand ein Uhrenbauteil ist.

10. Verfahren zum Herstellen eines Gegenstands nach einem der vorhergehenden Ansprüche, der ein Substrat und eine korrosionshemmende Beschichtung umfasst, die auf mindestens einem Teil einer Oberfläche des Substrats vorhanden ist, wobei das Verfahren Folgendes umfasst:
- Bereitstellen eines Substrats, das ein metallisches Element und/oder eine Legierung eines metallischen Elements umfasst,
- Bereitstellen einer ersten Verbindung gemäß Formel (I) und einer zweiten Verbindung gemäß Formel (II),
- Hydrolysieren der ersten Verbindung und der zweiten Verbindung in Gegenwart von Wasser,
- Kondensieren der hydrolysierten ersten Verbindung und der hydrolysierten zweiten Verbindung miteinander, wodurch ein Präpolymer erhalten wird, das die funktionellen Gruppen R1 und R5 umfasst,
- Aufbringen des Präpolymers auf mindestens einen Teil einer Oberfläche des Substrats, und
- Herbeiführen der Vernetzung der vernetzbaren funktionellen Gruppe R5 durch Aussetzen des Präpolymers einer oder mehrerer der folgenden Bedingungen: einer Temperatur von bis zu 250 °C, UV-Strahlung oder IR-Strahlung, wodurch ein Gegenstand erhalten wird, der ein Substrat und eine korrosionshemmende Beschichtung umfasst, die mindestens einen Teil einer Oberfläche des Substrats bedeckt,
**dadurch gekennzeichnet, dass** die korrosionshemmende Beschichtung eine vernetzte anorganisch-organische Hybridbeschichtung ist, die mindestens eine funktionelle Gruppe R¹ umfasst, und dass die vernetzte anorganisch-organische Hybridbeschichtung mittels Sauerstoff-M-Bindungen kovalent an das metallische Element oder dessen Legierung gebunden ist.

11. Verfahren nach Anspruch 10, wobei die Vernetzung bei einer Temperatur zwischen 50 °C und 200 °C, vorzugsweise zwischen 100 °C und 175 °C, durchgeführt wird.

12. Verfahren nach Anspruch 10 oder Anspruch 11, wobei R¹ gleich - (CH₂)x(CF₂)yCF₃ ist, wobei x zwischen 0 und z-1 liegt, y gleich z-x-1 ist und z die Anzahl der Kohlenstoffatome bezeichnet und zwischen 1 und 20 liegt.

13. Verfahren nach einem der Ansprüche 10 bis 11, wobei R¹ gleich - (CH₂)₃NHC(O)OCH₂CF(CF₃)OCF₂CF(CF₃)O(CF₂)₂CF₃ ist.

14. Verfahren nach einem der Ansprüche 10 bis 13, wobei R², R³, R⁴, R⁶, R⁷ und R⁸ jeweils unabhängig voneinander C₁-C₈-Alkyl, vorzugsweise C₁-C₄-Alkyl, sind.

15. Verwendung des Gegenstands nach einem der Ansprüche 1 bis 9 in einer Uhr.

## Revendications

1. Article comprenant un substrat et un revêtement inhibiteur de corrosion présent sur l'au moins une partie d'une surface du substrat, dans lequel le substrat comprend un élément métallique et/ou un alliage d'un élément métallique, dans lequel le revêtement inhibiteur de corrosion est un revêtement hybride organique-inorganique réticulé obtenu par réticulation d'un prépolymère obtenu par hydrolyse et condensation d'un composé selon la formule (I) et d'un composé selon la formule (II), 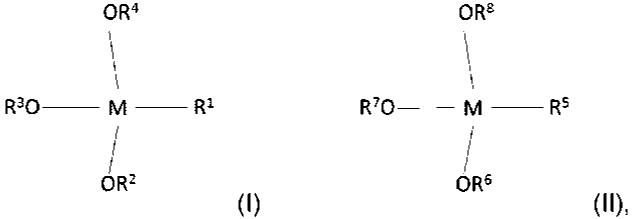 dans lequel
M dans la formule (I) et dans la formule (II), individuellement, est le silicium ou le titane,
R¹ est un alkyle C1-C20 comprenant l'au moins un atome de fluor,
R⁵ est un groupe fonctionnel réticulable choisi dans le groupe constitué par un époxy, un (méth)acrylate, un ester, un mercapto, un vinyle et un uréthane (méth)acrylé,
R², R³, R⁴, R⁶, R⁷ et R⁸ sont chacun indépendamment l'un de l'autre H, un alkyle C1-C20, un aryle C1-C10, un alcényle C1-C20, un alkylaryle C1-C20 ou un arylalkyle C1-C20,
dans lequel le revêtement hybride organique-inorganique réticulé comprend du silicium et/ou du titane et comprend l'au moins un groupe fonctionnel R¹, **caractérisé en ce que**
- le revêtement hybride organique-inorganique est réticulé via un (méth)acrylate, un ester, un mercapto, un vinyle ou un uréthane (méth)acrylé, et
- Le revêtement hybride organique-inorganique réticulé est lié par covalence à l'élément métallique ou à l'alliage de celui-ci au moyen de liaisons oxygène-silicium et/ou oxygène-titane, respectivement.

2. Article selon la revendication 1, dans lequel le revêtement hybride organique-inorganique réticulé comprend en outre des liaisons carbone-silicium.

3. Article selon l'une quelconque des revendications précédentes, dans lequel R¹ est -(CH₂)ₓ(CF₂)_{y}CF₃, où x est compris entre 0 et z-1, y est z-x-1, et z est le nombre d'atomes de carbone et est compris entre 1 et 20.

4. Article selon la revendication 3, dans lequel R¹ est -(CH₂)₂(CF₂)₅CF₃.

5. Article selon l'une quelconque des revendications 1 à 2, dans lequel R¹ est -(CH₂)₃NHC(O)OCH₂CF(CF₃)OCF₂CF(CF₃)O(CF₂)2CF₃.

6. Article selon l'une quelconque des revendications précédentes, dans lequel l'élément métallique est le fer ou le cuivre.

7. Article selon la revendication 6, dans lequel l'élément métallique est du fer et le substrat comprend de l'acier, de préférence de l'acier au carbone.

8. Article selon la revendication 6, dans lequel l'élément métallique est du cuivre et le substrat comprend un alliage de cuivre, de préférence du laiton.

9. Article selon l'une quelconque des revendications précédentes, dans lequel l'article est un composant de montre.

10. Procédé pour produire un article comprenant un substrat et un revêtement inhibiteur de corrosion présent sur l'au moins une partie d'une surface du substrat, l'article selon l'une quelconque des revendications précédentes, dans lequel le procédé comprend :
- la fourniture d'un substrat comprenant un élément métallique et/ou un alliage d'un élément métallique,
- la fourniture d'un premier composé selon la formule (I) et d'un deuxième composé selon la formule (II),
- l'hydrolyse du premier composé et du deuxième composé en présence d'eau,
- la condensation du premier composé hydrolysé et du deuxième composé hydrolysé, obtenant ainsi un prépolymère comprenant R¹ et R⁵ en tant que groupes fonctionnels,
- l'application du prépolymère sur l'au moins une partie d'une surface du substrat, et
- l'induction de la réticulation du groupe fonctionnel réticulable R⁵ par exposition du prépolymère à un ou plusieurs des éléments suivants : une température allant jusqu'à 250 °C, un rayonnement UV ou un rayonnement IR, obtenant ainsi un article comprenant un substrat et un revêtement inhibiteur de corrosion recouvrant l'au moins une partie d'une surface du substrat,
**caractérisé en ce que** le revêtement inhibiteur de corrosion est un revêtement hybride organique-inorganique réticulé comprenant l'au moins un groupe fonctionnel R¹, et **en ce que** le revêtement hybride organique-inorganique réticulé est lié de manière covalente à l'élément métallique ou à l'alliage de celui-ci au moyen de liaisons oxygène-M.

11. Procédé selon la revendication 10, dans lequel la réticulation est effectuée à une température comprise entre 50 °C et 200 °C, de préférence entre 100 °C et 175 °C.

12. Procédé selon la revendication 10 ou la revendication 11, dans lequel R¹ est -(CH₂)ₓ(CF₂)_{y}CF₃, où x est compris entre 0 et z-1, y est z-x-1, et z est le nombre d'atomes de carbone et est compris entre 1 et 20.

13. Procédé selon l'une quelconque des revendications 10 à 11, dans lequel R¹ est -(CH₂)₃NHC(O)OCH₂CF(CF₃)OCF₂CF(CF₃)O(CF₂)2CF₃.

14. Procédé selon l'une quelconque des revendications 10 à 13, dans lequel R², R³, R⁴, R⁶, R⁷ et R⁸ sont chacun indépendamment l'un de l'autre un groupe alkyle C₁-C₈, de préférence un groupe alkyle C₁-C₄.

15. Utilisation de l'article selon l'une quelconque des revendications 1 à 9 dans une montre.
